# EUROPÄISCHE PATENTSCHRIFT

(11) **EP 4 088 860 B1**
(45) Veröffentlichungstag und Bekanntmachung des Hinweises auf die Patenterteilung: **27.03.2024**
(21) Anmeldenummer: 22000126.7
(22) Anmeldetag: 05.05.2022
(51) Int. Cl.: B23Q 11/00, B23Q 11/08

(54) **BEARBEITUNGSZELLE FÜR SPANENDE TROCKENBEARBEITUNG**
MACHINING CELL FOR DRY MACHINING
CELLULE D'USINAGE POUR USINAGE À SEC PAR ENLÈVEMENT DE COPEAUX

(30) Priorität: 06.05.2021 DE 102021002404
(43) Veröffentlichungstag der Anmeldung: 16.11.2022
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A2- 0 650 800
- DE-A1- 19 651 662
- JP-A- S61 103 753

## Beschreibung

Die Erfindung betrifft eine Bearbeitungszelle für spanende Trockenbearbeitung mit einem mittels einer, eine Einblasvorrichtung und eine Absaugvorrichtung aufweisenden Einhausung begrenzten Arbeitsraum sowie ein Verfahren zur Betrieb einer derartigen Bearbeitungszelle zur Bearbeitung eines Werkstücks. Aus der DE 297 05 797 U1 ist eine Bearbeitungsvorrichtung für Holzbearbeitung bekannt, bei der das Werkstück durch den Arbeitsraum hindurchgeschoben wird.

Aus der EP 0 650 800 A2 ist eine Bearbeitungszelle für spanende Trockenbearbeitung bekannt, mit einem mittels einer, eine Einblasvorrichtung und eine Absaugvorrichtung aufweisenden Einhausung begrenzten Arbeitsraum, wobei- die Einhausung bereichsweise mittels eines Werkstücktischs verschlossen ist, und ein Späneförderer unterhalb des Werkstücktischs angeordnet ist.

Der vorliegenden Erfindung liegt die Problemstellung zugrunde, eine Belastung der Umgebung bei automatisierte Trockenbearbeitung zu vermindern.

Diese Problemstellung wird mit den Merkmalen des Hauptanspruches gelöst. Dazu ist die Einhausung bereichsweise mittels eines Werkstücktischs verschlossen. Die Einblasrichtung der Einblasvorrichtung ist parallel zu einer Aufspannfläche des Werkstücktischs ausgerichtet. Ein Späneförderer mit einer normal zur Einblasrichtung orientieren Förderrichtung ist unterhalb des Werkstücktischs angeordnet. Außerdem hat die Absaugvorrichtung einen Absaugkanal mit einer normal zur Förderrichtung des Späneförderers orientierten Absaugrichtung, die mit der Einblasrichtung einen Winkel zwischen 20 Grad und 160 Grad einschließt.

Beim Betrieb der Bearbeitungszelle wird außerhalb der Einhausung ein Werkstück auf den Werkstücktisch aufgespannt. Eine Werkstückaufspannvorrichtung des Werkstücktischs mit dem Werkstück wird so bewegt, dass der Werkstücktisch in einer Arbeitsposition steht und das Werkstück sich im Arbeitsraum befindet. Die Einblasvorrichtung wird auf einen bearbeitungsprozessabhängigen Volumenstrom eingestellt. Die Absaugvorrichtung wird derart eingestellt, dass der Druck im Arbeitsraum geringer ist als der Druck in der Umgebung. Nach der spanenden Bearbeitung des Werkstücks werden die Absaugvorrichtung und die Einblasvorrichtung abgeschaltet. Der Späneförderer fördert innerhalb eines vorgegebenen Zeitintervalls in der Förderrichtung. Der Werkstücktisch mit dem bearbeiteten Werkstück wird in die Ausgangslage geschwenkt.

Die Einhausung der Bearbeitungszelle ist während der Bearbeitung weitgehend verschlossen. Bei der Bearbeitung anfallende Späne und Staub werden mittels der Einblasvorrichtung vom Bereich der Werkzeugeingriffsstelle entfernt. Im Arbeitsraum wird der Abfall gewichtsabhängig getrennt. Der schwerere Abfall wird mittels des Späneförderers z.B. intermittierend aus dem Arbeitsraum gefördert. Der leichtere Abfall wird mittels der Absaugvorrichtung kontinuierlich aus dem Arbeitsraum gefördert. Außerhalb des Arbeitsraums kann der Abfall dann in Sammelbehältern gelagert werden.

Weitere Einzelheiten der Erfindung ergeben sich aus den Unteransprüchen und der nachfolgenden Beschreibung schematisch dargestellter Ausführungsformen.
- Figur 1:: Bearbeitungszelle;
- Figur 2:: Querschnitt von Figur 1;
- Figur 3:: Längsschnitt von Figur 1;
- Figur 4:: Längsschnitt durch die Ebene Einblasdüsen;
- Figur 5:: Querschnitt der Bearbeitungszelle in Förderrichtung;
- Figur 6:: Einblasdüse;
- Figur 7:: Absaugdüse.

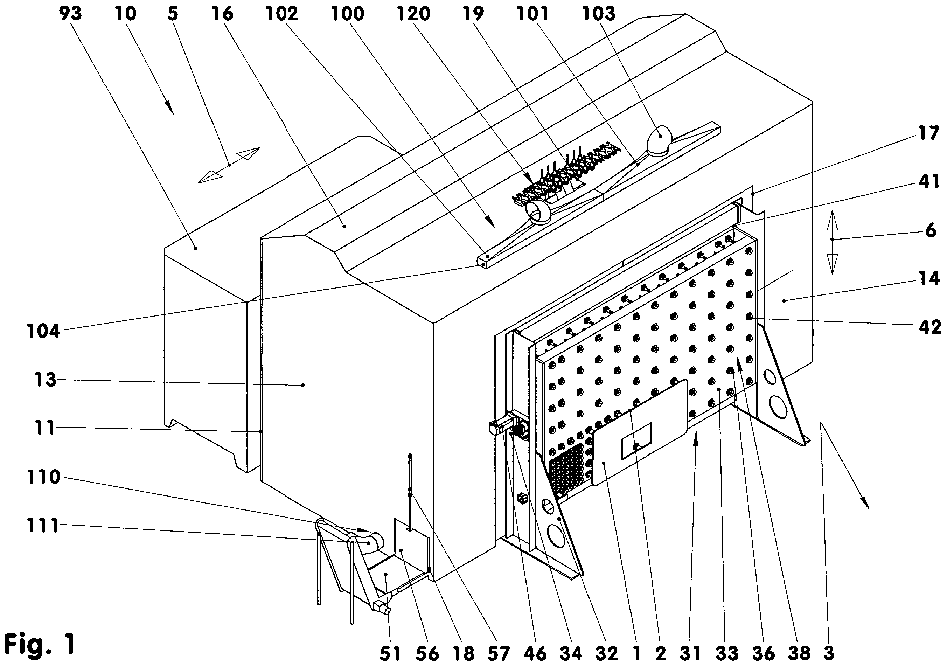

Die Figuren 1 - 7 zeigen eine Bearbeitungszelle (10) und einige ihrer Einzelteile. Die Bearbeitungszelle (10) hat eine Einhausung (11), die einen Arbeitsraum (91) begrenzt. Im Arbeitsraum (91) erfolgt mittels eines Industrieroboters (61) eine spanende Werkstückbearbeitung. Hierfür trägt der Industrieroboter (61) eine Bearbeitungseinheit (81). Das zu bearbeitende Werkstück (1) ist auf einem Werkstücktisch (31) aufgespannt. Hierbei wird das Werkstück (1) mittels Unterdruck in seiner Position auf einer Werkstückaufspannvorrichtung (35; 36) des Werkstücktischs (31) gehalten.

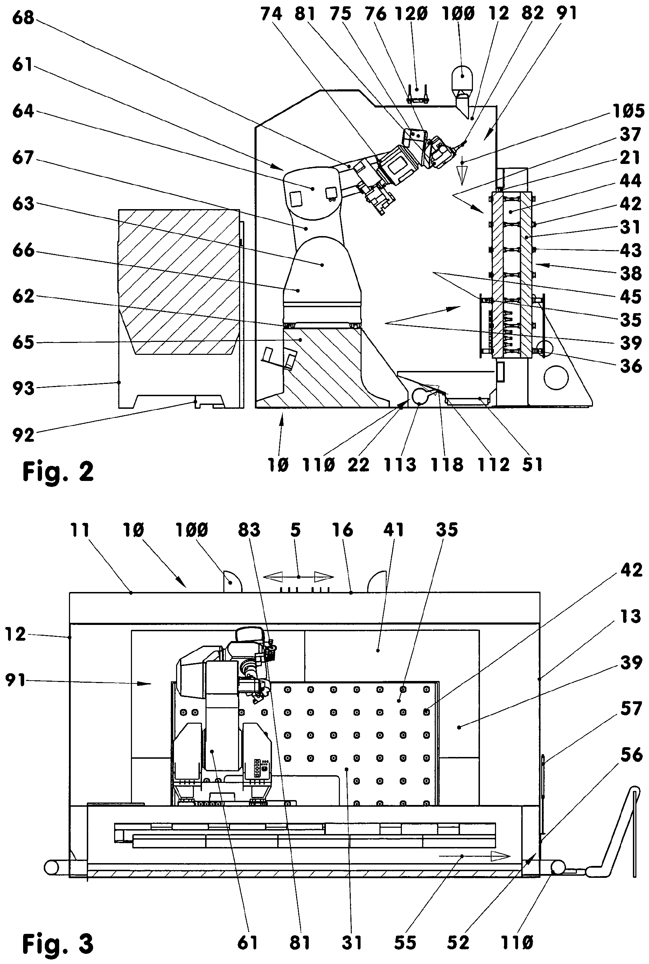

Die Einhausung (11) ist zumindest annähernd quaderförmig aufgebaut. Sie hat zwei Stirnwände (12, 13), zwei Längswände (14, 15) und ein Dach (16). Die Stirnwände (12, 13) begrenzen die Einhausung in der Längsrichtung (5). Sie sind normal zur Längsrichtung (5) orientiert. Die Längswände (14, 15) verbinden die beiden Stirnwände (12, 13). Die in der Darstellung der Figur 3 links liegende Stirnwand (12) und die an diese angrenzende Längswand (15) sind verschlossen. In den Darstellungen der Figuren 1, 2, und 5 sind neben der Einhausung (11) Steuerschränke (92) und Schaltschränke (93) angeordnet. Außerdem können in diesen Wänden (12 - 15) Wartungsöffnungen oder Wartungszugänge vorgesehen sein.

In der ersten Längswand (14) steht in einer Beschickungsöffnung (17) der Werkstücktisch (31). In der dargestellten Arbeitsposition (39) ist der Werkstücktisch (31) gegenüber der Einhausung (11) abgedichtet. Der Werkstücktisch (31) steht in diesen Darstellungen senkrecht.

Die zweite Stirnwand (13) ist von einem Späneförderer (51) durchdrungen. Eine bewegbare Durchlasssperre (52) dichtet eine Förderöffnung (18) für den Späneförderer (51) gegenüber der Einhausung (11) ab. Weiterhin durchdringt eine Absaugleitung (111) abgedichtet die Einhausung (11). Diese Absaugleitung (111) ist Teil einer Absaugvorrichtung (110) der Bearbeitungszelle (10).

Im beispielsweise gestuft ausgebildeten Dach (16) der Einhausung (11) sitzen zwei Einblasdüsen (101, 102). Diese, das Dach (16) durchdringende Einblasdüsen (101, 102) sind Teil einer Einblasvorrichtung (100). Weiterhin ist auf dem Dach (16) ein Werkzeugwechsler (120) angeordnet. Im Bereich des Werkzeugwechslers (120) hat das Dach (16) eine Dachschleuse (19), beispielsweise in Form eines Schiebedachs (19).

Der Werkstücktisch (31) hat ein Gestell (32), in dem ein Werkstückplattenträger (33) mit zwei voneinander abgewandten Werkstückaufspannvorrichtungen (35; 36) schwenkbar gelagert ist. Der Schwenkwinkel der Werkstückaufspannvorrichtungen (35, 36) um eine horizontale Schwenkachse (34) beträgt im Ausführungsbeispiel 180 Grad. Zum Schwenken wird ein am Gestell (32) angeordneter Schwenkmotor (46) eingesetzt. In der dargestellten Arbeitsposition (39) steht eine der Werkstückaufspannseiten (38) außerhalb der Einhausung (11). Die andere Werkstückaufspannseite (37) steht innerhalb der Einhausung (11). Zum Abdichten gegenüber der Einhausung (11) hat der Werkstücktisch (31) beispielsweise mehrere Abdichtplatten (41), die die Werkstückaufspannvorrichtungen (35, 36) umgeben. Die Abdichtplatten (41) können sich z.B. an aufblasbare Luftschläuche (21) anlegen, die die als Werkstückschleuse (17) ausgebildete Beschickungsöffnung (17) umgeben.

Zur Aufspannung eines Werkstücks (1) hat jede Werkstückaufspannvorrichtung (35; 36) eine Vielzahl von Werkstückspannelementen (42). Im Ausführungsbeispiel sind beide Werkstückspannvorrichtungen (35, 36) gleichartig ausgebildet. Die Werkstückspannelemente (42) sind matrixartig in Spalten und Reihen angeordnet. Das einzelne Werkstückspannelement (42) ist ein z.B. pneumatisch aus- und einfahrbares Teleskopelement. Auch ein elektrischer oder hydraulischer Antrieb der Werkstückspannelemente (42) ist denkbar. Die Hubvorrichtung jedes Werkstückspannelements (42) ist einzeln ansteuerbar. An seiner auskragenden Seite hat das einzelne Werkstückspannelement (42) einen Saugnapf (43), der ventilgesteuert mit einer Vakuumpumpe verbunden ist. Hierbei verfügt die Unterdruckansteuerung jedes einzelnen Werkstückspannelements (42) über ein separates, einzeln schaltbares Ventil. Das einzelne Ventil ist beispielsweise ein elektromagnetisch betätigtes 2/2-Wegeventil mit einem offenen und einem geschlossenen Schaltzustand. Die ausgefahrenen Werkstückspannelemente (42) bilden eine Werkstückaufspannfläche (45).

Um ein Werkstück (1) auf den Werkstücktisch (31) aufzuspannen, wird dieses auf die außerhalb der Einhausung (11) liegende Werkstückaufspannvorrichtung (36) gespannt. Hierzu werden beispielsweise diejenigen Werkstückspannelemente (42) ausgefahren, die das Werkstück (1) abstützen. Beispielsweise können auch Ausrichtanschläge ausgefahren werden. Sämtliche anderen Werkstückspannelemente (42) verbleiben in ihrer eingefahrenen Ausgangslage. Die ausgefahrenen Werkstückspannelemente (42) werden mit Unterdruck beaufschlagt und das Werkstück ausgerichtet angelegt. Es ist auch denkbar, z.B. für die Bearbeitung kleinerer Werkstücke (1) mehr als ein Werkstück auf den Werkstücktisch (31) zu spannen.

Die Position des zu bearbeitenden Werkstücks (1) auf dem Werkstücktisch (31) kann auch optisch ermittelt werden. Hierzu dient beispielsweise eine Kamera, die die Lage der Werkstücckontur relativ zur Kontur der Werkstückaufspannvorrichtung (35; 36) erfasst. Die Lage des Werkstücks relativ zu den maschinenbezogenen Bezugskoordinaten kann dann an die Steuerung für die Werkstückbearbeitung übermittelt werden.

Anschließend wird der Werkstückplattenträger (33) so um die Schwenkachse (34) geschwenkt, dass die außenliegende Werkstückaufspannvorrichtung (36) in den Arbeitsraum (91) gelangt. Die bisher im Arbeitsraum (91) stehende Werkstückspannvorrichtung (35) wird dabei nach außen geschwenkt. Das auf dieser ersten Werkstückaufspannvorrichtung (35) befindliche Werkstück kann nun entnommen werden und ein neues, zu bearbeitendes Werkstück (1) aufgespannt werden. Dies kann manuell oder mittels einer Handhabungsvorrichtung erfolgen. Im Arbeitsraum (91) erfolgt die Bearbeitung des Werkstücks (1). Das einzelne Werkstück (1) ist beispielsweise eine Holzplatte, eine Verbundmaterialplatte, eine Metallplatte, etc. Bei einer Metallplatte kann dies beispielsweise eine Aluminiumplatte sein. In diesem Ausführungsbeispiel hat das bearbeitbare Werkstück (1) eine maximale Länge von 3600 Millimeter und eine maximale Breite von 2100 Millimeter. Bei auf dem Werkstücktisch (31) aufgespanntem Werkstück (1) ist die Werkstückbreite in der Höhenrichtung (6) der Bearbeitungszelle (10) orientiert.

Unterhalb des Werkstücktischs (31) steht im Arbeitsraum (91) ein Späneförderer (51). Hierbei liegt der Obertrum (54) des Fördergurts (53) unter der gesamten, in der Längsrichtung (5) der Bearbeitungszelle (10) orientierten Länge des Werkstücktischs (31). Der Födergurt (53) des Späneförderers (51) durchdringt in seiner Förderrichtung (55) eine Stirnwand (13) der Einhausung (11) durch die Förderöffnung (18).

Die Durchlasssperre (52) umfasst beispielsweise eine Hubplatte (56). Diese sperrt bei stehendem Fördergurt (53) die Förderöffnung (18) der Einhausung (11) im Bereich des Späneförderers (51). Um Späne aus dem Arbeitsraum (91) in die Umgebung (3) zu fördern, wird die Hubplatte (56) beispielsweise mittels einer Hubvorrichtung (57) angehoben. Der Spänetransport erfolgt beispielsweise außerhalb der Hauptzeit der Werkstückbearbeitung. Während der Bearbeitung des Werkstücks (1) steht der Späneförderer (51) still.

Mittels der in den Steuerschränken (92) angeordneten Steuerung werden beispielsweise sämtliche Abläufe des Materialflusses und der Bearbeitung der Bearbeitungszelle (10) gesteuert und überwacht. Zur Kühlung wird Kühlluft aus der Umgebung (3) angesaugt.

Der Industrieroboter (61) hat im Ausführungsbeispiel die Bauart eines Vertikal-Knickarmroboters (61). Er hat eine translatorische Hauptachse (62) und zwei rotatorische Hauptachsen (63, 64). Die translatorische Achse (61), die A-Achse (61) wird durch eine Sockelschiene (65) und einen entlang dieser verfahrbaren Sockel (66) gebildet. Die Sockelschiene (65) ist in der Längsrichtung (5) der Bearbeitungszelle (10) orientiert. Ein im Sockel (66) schwenkbar gelagerter Fußhebel (67) und ein im Fußhebel (67) schwenkbar gelagerter Kniehebel (68) bilden eine kinematische Kette des Industrieroboters (61). Hierbei bilden der Sockel (66) und der Fußhebel (67) die B-Achse (63) als rotatorische Hauptachse (63). Der Fußhebel (67) und der Kniehebel (68) bilden die C-Achse der sogenannten TRR-Kinematik des Sechs-Achs-Industrieroboters (61).

Die erste Nebenachse (71), die D-Achse (71), umfasst einen um seine Längsachse drehbaren Tragarm (74), der am freien Ende des Kniehebels (68) gelagert ist. Die zweite Nebenachse (72) ist die E-Achse (72), um die der Handhebel (75) um z.B. 270 Winkelgrade schwenkbar gelagert ist. Der Handhebel (75) trägt einen um 360 Winkelgrade schwenkbaren Drehteller (76), der um die F-Achse (73) rotierbar gelagert ist. Am Drehteller (76) ist die Bearbeitungseinheit (81) gelagert.

Die Bearbeitungseinheit (81) umfasst im Ausführungsbeispiel eine Vielzahl angetriebener Werkzeuge (82, 83). Dies sind beispielsweise Bohrwerkzeuge (82), Sägewerkzeuge (83), etc. Diese Werkzeuge (82, 83) sind einzeln oder gruppenweise antreibbar.

Um ein Werkzeug (82, 83) der Bearbeitungseinheit (81) zu wechseln, wird der Werkzeugwechsler (120) eingesetzt. Hierfür wird nach dem Öffnen des Schiebedachs (19) die Bearbeitungseinheit (81) so verfahren, dass diese zumindest bereichsweise aus der Dachschleuse (19) herausragt. Beispielsweise ragt ein Bohrwerkzeug (82) nach oben in den Bereich des Werkzeugwechslers (120). Dieses Bohrwerkzeug (82) wird dann mittels des Werkzeugwechslers (120) übernommen. Der Werkzeugwechsler (120) wird nun z.B. weitergeschaltet, bis ein neues Werkzeug im Übernahmebereich der Bearbeitungseinheit (81) steht. Nach dem Einsetzen des neuen Bohrwerkzeugs (82) in die Bearbeitungseinheit (81) wird diese mittels des Industrieroboters (61) wieder innerhalb der Einhausung (11) verfahren. Anschließend wird die Dachschleuse (19) wieder verschlossen.

Die Einblasvorrichtung (100) umfasst beispielsweise einen Kompressor, mit dem Luft aus der Umgebung (3) angesaugt und verdichtet wird. Diese komprimierte Luft wird dann mittels eines Gebläses durch die beispielsweise zwei Einblasdüsen (101, 102) in den Arbeitsraum (91) geblasen. Die Einblasvorrichtung (100) kann intermittierend betrieben werden. Beispielsweise ist sie während der Hauptzeit der Werkstückbearbeitung eingeschaltet. Während der Nebenzeit, dies sind beispielsweise die Rüstzeit und die Werkstückwechselzeit, kann die Einblasvorrichtung (100) abgeschaltet sein. Auch ein kontinuierlicher Betrieb der Einblasvorrichtung (100) ist denkbar.

Der Volumenstrom der Einblasvorrichtung (100) kann konstant sein oder steuerbar ausgebildet sein. Bei einem steuerbaren Volumenstrom ist beispielsweise die z.B. volumenstromproportionale Drehzahl des Gebläses einstellbar. Die Einstellung des Volumenstroms kann prozessgesteuert erfolgen. Hierbei wird der Einblasvolumenstrom z.B. in Abhängigkeit des erwarteten Spanabfalls der jeweiligen spanenden Trockenbearbeitung eingestellt. Der erwartete Spanabfall ergibt sich beispielsweise aus der Zustellung, der Schnittgeschwindigkeit und dem Fertigungsverfahren. So kann beispielsweise bei einem Zerspanen mit geometrisch unbestimmter Schneide, z.B. einem Schleifverfahren, ein höherer Volumenstrom eingestellt werden als bei einem Zerspanen mit geometrisch bestimmter Schneide, z.B. einem Fräsverfahren.

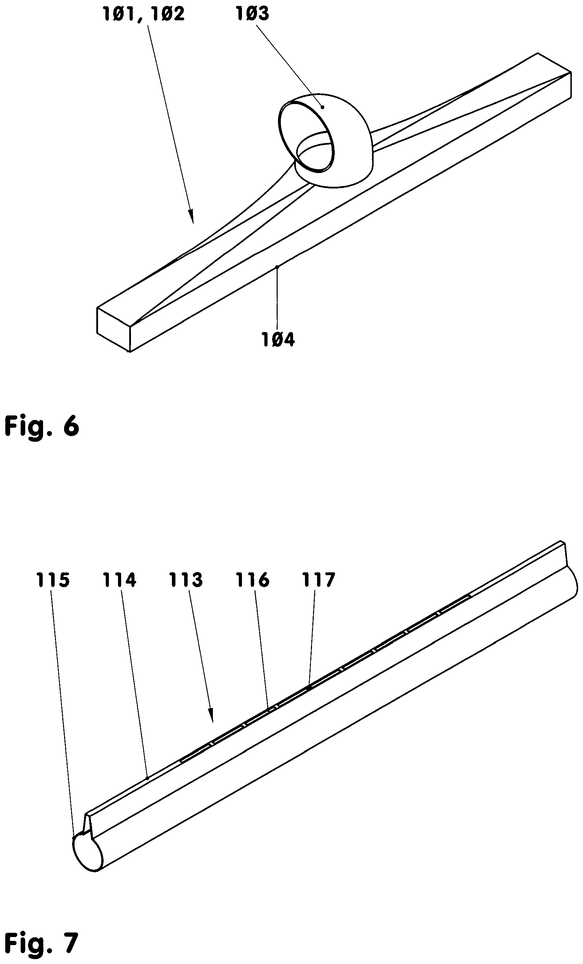

Die Figur 6 zeigt eine Einblasdüse (101; 102). Die zweite Einblasdüse (102; 101) ist beispielsweise um eine vertikale Mittenquerebene der Bearbeitungszelle (10) zur ersten Einblasdüse (101) spiegelbildlich aufgebaut. Die Einblasdüse (101; 102) hat einen in Längsrichtung (5) orientierten Einlasskrümmer (103), der im eingebauten Zustand oberhalb des Dachs (16) liegt. Eine in der Längsrichtung (5) orientierte Flachdüse (104) hat eine rechteckige Innenquerschnittsfläche. Im Ausführungsbeispiel beträgt die Innenquerschnittsfläche der Flachdüse (104) das 6,5-fache der Innenquerschnittsfläche des Einlasskrümmers (103). Hierbei beträgt die Breite der Flachdüse (104) z.B. 60 % des Durchmessers des Einlasskrümmers (103). Die Flachdüse (104) durchdringt das Dach (16) der Einhausung (11) und ragt ausgangsseitig in den Arbeitsraum (91).

Die Gesamtlänge der Einblasdüsen (101, 102) ist länger als die Länge des Werkstücktisches (31). Im Ausführungsbeispiel liegt die Kontaktfläche der beiden Einblasdüsen (101, 102) in einer vertikalen Mittenquerebene des Werkstücktisches (31). Jede der Einblasdüsen (101; 102) der dargestellten Bearbeitungszelle (10) hat eine Länge von 55 % der Länge des Werkstücktisches (31). Die Gesamtlänge der Einblasdüsen (101, 102) kann auch kürzer als die Länge des Werkstücktisches (31) sein. Beispielsweise beträgt sie mindestens 80 % dieser Länge. Es ist auch denkbar, die Einblasdüsen (101, 102) in zwei oder mehr zueinander parallelen Reihen anzuordnen.

Die Einblasrichtung (105) der Einblasdüsen (101, 102) ist in einer Ebene parallel zu der im Arbeitsraum (91) befindlichen Werkstückaufspannfläche (45) des Werkstücktischs (31) gerichtet. Beispielsweise strömt die eingeblasene Luft in den Zwischenraum (44) zwischen dem Werkstück (1) und dem Werkstückplattenträger (33). Die in den Arbeitsraum (91) eingeblasene Luft kann unmittelbar der Umgebung (3) entnommen sein. Sie kann aber auch aufbereitet sein. Beispielsweise kann ihre Temperatur unabhängig von der Umgebungstemperatur auf einen konstanten Wert, z.B. 20 Grad Celsius, eingestellt sein. Die eingeblasene Luft kann auch eine reduzierte Feuchtigkeit aufweisen. Beispielsweis kann trockene Luft eingesetzt werden. Auch können die Einblasdüsen (101; 102) einzeln ansteuerbar sein.

Die Einblasdüsen (101, 102) können entlang ihrer gesamten Länge in den Arbeitsraum (91) einblasen. Es ist aber auch denkbar, die einzelne Einblasdüse (101; 102) in einzelne, einzeln oder gruppenweise ansteuerbare Segmente zu unterteilen. Diese Segmente können dann einzeln oder gruppenweise geöffnet oder verschlossen werden. So kann beispielsweise der Luftstrom der Einblasvorrichtung (100) auf den Werkzeugeingriffsbereich und seine unmittelbare Umgebung gerichtet sein. Auch der Einsatz einer schwenkbaren Einblasdüse (101; 102) ist denkbar. Die Schwenkachse der Einblasdüse (101; 102) kann hierbei horizontal und/oder vertikal orientiert sein.

Die Absaugvorrichtung (110) umfasst beispielsweise eine außerhalb der Einhausung (11) stehende Absaugpumpe mit einer Filter- und/oder Abscheidevorrichtung zum Trennen der abgesaugten festen Partikel aus dem Absaugstrom. Innerhalb der Einhausung (11) hat die Absaugvorrichtung (110) einen an die Oberseite des Obertrums (54) angrenzenden Absaugkanal (112), der in eine in der Längsrichtung (5) orientierte Absaugdüse (113) mündet. Die Absaugdüse (113) ist beispielsweise auf der der Absaugpumpe abgewandten Seite verschlossen. Die Absaugleitung (111) verbindet die Absaugdüse (113) mit der Absaugpumpe.

Die Förderleistung der Absaugvorrichtung (110) ist einstellbar ausgebildet. Zum Einstellen wird beispielsweise der mittels der Absaugpumpe geförderte Volumenstrom verstellt. Dies erfolgt beispielsweise mittels einer Drehzahlverstellung des Antriebsmotors der Absaugpumpe.

Die Absaugpumpe ist im Ausführungsbeispiel in einen Druckregelkreis eingebunden. Der Sollwert dieses geschlossenen Druckregelkreises ist ein Maß für den Differenzdruck zwischen dem Luftdruck innerhalb der Einhausung (11) und dem Luftdruck in der Umgebung (3). Hierbei ist der Druck innerhalb der Einhausung (11) niedriger als der Umgebungsdruck. Das Messglied des Regelkreises ist ein innerhalb der Einhausung (11) angeordnetes Druckmessgerät, z.B. ein Manometer. Zur Ermittlung des Differenzdrucks wird der z.B. analog übertragene Messwert dieses Manometers mit dem Messwert eines außerhalb der Einhausung (11) angeordneten Manometers verglichen. Um den Differenzdruck zu erhöhen, wird beispielsweise die Drehzahl der Absaugpumpe und damit der geförderte Absaugvolumenstrom erhöht. Übersteigt der Differenzdruck einen oberen Schwellenwert von z.B. 0,1 bar, kann der Volumenstrom der Absaugvorrichtung (110) vermindert werden.

In der Figur 7 ist eine Absaugdüse (113) dargestellt. Sie hat einen Absaugtrichter (114), der in ein Absaugrohr (115) mündet. Die Länge der Absaugdüse (113) entspricht beispielsweise 80 % der Gesamtlänge der Einblasdüsen (101, 102). Beispielsweise liegt die Absaugdüse (113) entlang des Bodens (22) der Einhausung (11). Der Absaugtrichter (114) ragt in einem Winkel von beispielsweise 20 Grad zur Horizontalen aus dem Absaugrohr (115) hervor. Er ist in Richtung des Späneförderers (51) orientiert. Der unmittelbar oberhalb des Späneförderers (51) liegende Absaugkanal (112) schließt im Ausführungsbeispiel mit der Ebene des Obertrums (54) einen Winkel von 20 Grad ein. Die in der Saugrichtung des Absaugkanals (112) gerichtete Absaugrichtung (118) zeigt hierbei schräg nach oben.

Die Längen des Absaugtrichters (114) und des Absaugkanals (112) entsprechen beispielsweise der Länge des Absaugrohrs (115). Der Absaugtrichter (114) hat seiner Eingangsseite Längskanäle (116), die mittels einzelner Stege (117) unterbrochen sind. Die Gesamtlänge der Längskanäle (116) beträgt beispielsweise 60 % der Länge der Absaugdüse (113). Die Summe der offenen Querschnitte der Längskanäle (116) entspricht beispielsweise dem Querschnitt des Absaugrohrs (115).

In der Absaugdüse (113) und/oder im Absaugkanal (112) können einzelne Segmente einzeln oder gruppenweise ansteuerbar sein. Beispielsweise können sie einzeln oder gruppenweise geöffnet oder verschlossen werden. Die Ansteuerung der Segmente der Absaugdüse (113) und/oder des Absaugkanals (112) in der Längsrichtung (5) kann mit der Ansteuerung der Segmente der Einblasdüsen (101, 102) in der Längsrichtung (5) gekoppelt sein. Die Ansteuerung der Segmente erfolgt beispielsweise in Abhängigkeit des Orts der momentanen Werkzeugeingriffsstelle bei der Werkstückbearbeitung innerhalb des Arbeitsraums (91). Somit ist der zumindest annähernd vertikale, von oben nach unten gerichtete Luftstrom auf die momentane Bearbeitungsstelle konzentriert.

Für die Werkstückbearbeitung ist die Einhausung (11) quasi hermetisch verschlossen. Der Werkstücktisch (31) verschließt die Beschickungsöffnung (17). Die Förderöffnung (18) ist mittels der Hubplatte (56) verschlossen. Das Schiebedach (19) verschließt das Dach (16) der Einhausung (11). Die Absaugvorrichtung (110) und die Einblasvorrichtung (100) werden eingeschaltet. Dies kann zueinander zeitverzögert erfolgen, wobei beispielsweise die Absaugvorrichtung (110) um bis zu wenige Sekunden vor der Einblasvorrichtung (100) eingeschaltet wird.

Nach dem Einschalten der Einblasvorrichtung (100) und der Absaugvorrichtung (110) bildet sich ein Luftstrom entlang der Werkstückaufspannvorrichtung (35, 36) und des Werkstücks (1) von den Einblasdüsen (101, 102) zum Absaugkanal (112) und zur Absaugdüse (113). Die Einblasrichtung (105) ist beispielsweise senkrecht im Raum orientiert. Der Volumenstrom der Absaugvorrichtung (110) wird nun so eingestellt, dass sich im Arbeitsraum ein gegenüber dem Umgebungsdruck verminderter Druck ergibt. Beispielsweise ist hierfür der Volumenstrom der Absaugvorrichtung (110) größer als der Volumenstrom der Einblasvorrichtung (100). Im Ausführungsbeispiel ist der Volumenstrom durch die Absaugdüse (113) z.B. um 5 % größer als die Summe der der Volumenströme durch die Einblasdüsen (101, 102) und durch gegebenenfalls bestehende Spalte. Beispielsweise beträgt der Absaugvolumenstrom zwischen 1500 Kubikmeter pro Stunde und 2500 Kubikmeter pro Stunde. Die Geschwindigkeit des Absaugvolumenstroms beträgt beispielsweise zwischen 14 Meter pro Sekunde und 25 Meter pro Sekunde. In Bezug auf den Arbeitsraum (91) sind damit die Einblasvorrichtung (100) und die Absaugvorrichtung (110) pneumatisch parallel zueinander geschaltet. Der resultierende Volumenstrom im Arbeitsraum (91) ergibt sich aus der Summe des Volumenstroms der Einblasvorrichtung (100), des Leckagestroms und des Volumenstroms der Absaugvorrichtung (110). Hierbei haben die beiden erstgenannten Volumenströme ein positives und der letztgenannte Volumenstrom ein negatives Vorzeichen. Die Druckdifferenz der Einblasvorrichtung (100) und der Absaugvorrichtung (110) können hierbei gleich sein. Beide Vorrichtungen (100, 110) haben beispielsweise den gleichen Nulldurchgang und eine stabile Kennlinie.

Bei der Werkstückbearbeitung wird der Volumenstrom der Einblasvorrichtung (100) beispielsweise prozessabhängig eingestellt, wie oben beschrieben. Diese Einstellung richtet sich z.B. nach der Verteilung der Spänegröße des Abfalls. So kann z.B. für ein Sägeverfahren ein geringerer Volumenstrom als für ein Schleifverfahren eingestellt werden.

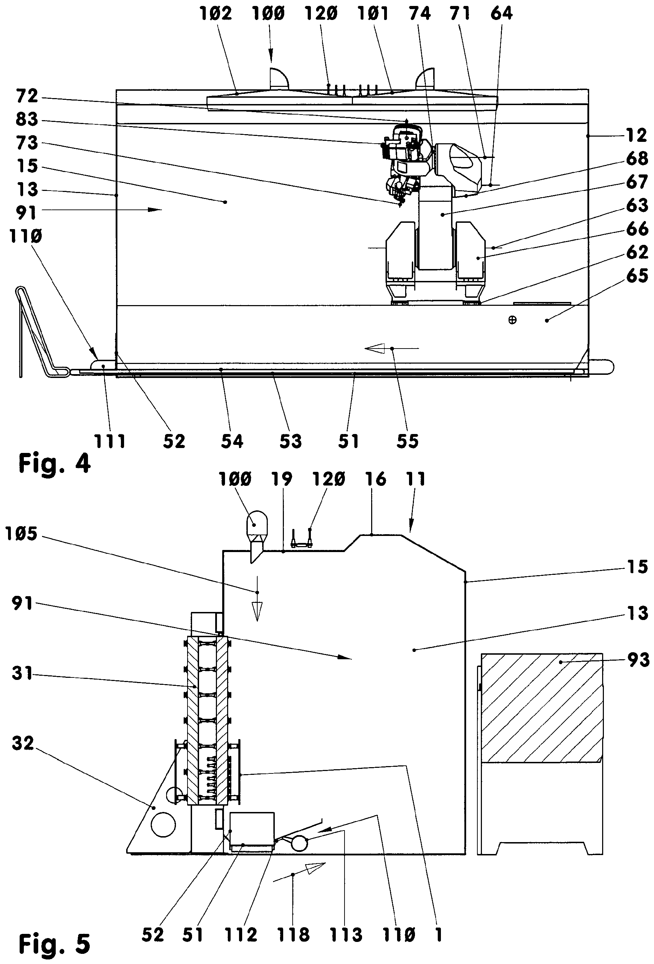

Die Absaugvorrichtung (110) wird in Abhängigkeit der Druckdifferenz zwischen dem Arbeitsraum (91) und der Umgebung (3) geregelt, wie oben beschrieben, sodass im Arbeitsraum ein Unterdruck entsteht. Dem bei einer Erhöhung des Volumenstroms der Einblasvorrichtung (100) steigenden Innendruck im Arbeitsraum (91) wird durch eine Erhöhung des Volumenstroms der Absaugvorrichtung (110) entgegengewirkt. Die Einblasvorrichtung (100) ist damit beispielsweise Teil einer prozessabhängigen, offenen Steuerung. Die Absaugvorrichtung (110) hingegen ist Teil eines geschlossenen Regelkreises, dessen Sollgröße die Druckdifferenz zwischen dem Arbeitsraum (91) und der Umgebung (3) ist. Das Messglied misst der Innendruck der Einhausung (11). Hiermit kann auch der Einfluss der durch Spalte einströmenden Fremdluft ausgeglichen werden. Der von der Einblasrichtung (105) und von der Absaugrichtung (118) eingeschlossene Winkel kann zwischen 20 Grad und 160 Grad betragen. In den Darstellungen der Figuren 2 und 5 beträgt dieser Winkel 110 Grad.

Bei der Bearbeitung des Werkstücks (1), z.B. einer Holzplatte, fallen Späne unterschiedlicher Größe an. Diese spanende Bearbeitung erfolgt trocken ohne den Einsatz von Kühlschmiermitteln. Holzteile und schwere Späne fallen von der Bearbeitungsstelle unmittelbar auf den Obertrum (54) des Späneförderers (51). Mittelschwere Späne schweben zunächst im Arbeitsraum (91). Sie werden mittels des Luftstroms zum Absaugkanal (112) bzw. zur Absaugdüse (113) gelenkt. Leichte Späne tendieren zum Anlagern in der Nähe der Bearbeitungsstelle und schweben ähnlich wie mittelschwere Späne im Arbeitsraum (91). Auch diese Späne werden mittels des Luftstroms am Anlagern und an einer Verteilung im Arbeitsraum (91) gehindert. Sie werden in den Absaugkanal (112) und in die Absaugdüse (113) geleitet. In der Filter- und/oder Abscheidevorrichtung werden diese Späne dann einem Sammler zugeführt. Die Bearbeitungszeit eines Werkstücks (1) beträgt im Ausführungsbeispiel zwischen einer Minute und zwei Minuten.

Wird eine Werkstückkante (2) bearbeitet, fallen Späne auf die Werkstückspannelemente (42). Der auf den Bereich zwischen dem Werkstück (1) und dem Werkstückplattenträger (33) gerichtete Teilstrom des Einblasstroms verhindert ein Ablagern der Späne und des Staubs auf den z.B. ausgefahrenen Werkstückspannelementen (42). Ein eventuelles Blockieren der Werkstückspannelemente (42) beim Wiedereinfahren wird damit verhindert.

Nach Abschluss der Werkstückbearbeitung wird die Bearbeitungseinheit (81) mittels des Industrieroboters (61) vom Werkstück (1) wegbewegt. Beispielsweise werden die Absaugvorrichtung (110) und die Einblasvorrichtung (100) zeitverzögert zueinander abgeschaltet. Diese Verzögerung kann wenige Millisekunden betragen, wobei z.B. zunächst die Absaugvorrichtung (110) abgeschaltet wird. Gegebenenfalls kann das Abschalten mittels eines im Arbeitsraum (91) angeordneten Staubsensors geschaltet werden. Der Druck im Arbeitsraum (91) steigt z.B. auf den Umgebungsdruck. Die Durchlasssperre (52) wird geöffnet, sodass die auf dem Späneförderer (51) liegenden Späne aus der Einhausung (11) mittels des Schnellförderbandes heraus gefördert werden. Das Fördern des Späneförderers (51) erfolgt beispielsweise während eines vorgegebenen Zeitintervalls. Innerhalb dieses Zeitintervalls hat sich das Obertrum (54) z.B. um den Betrag der Länge des Späneförderers (51) weiterbewegt. Das bisherige Untertrum bildet dann das neue Obetrum (54). Die Luftschläuche (21) werden komprimiert, sodass die Abdichtung der Beschickungsöffnung (17) aufgehoben ist. Der Werkstücktisch (31) wird geschwenkt, sodass eines neues, zu bearbeitendes Werkstück (1) im Arbeitsraum (91) bereitgestellt wird. Zeitlich parallel hierzu können mittels des Werkzeugwechslers (120) Bearbeitungswerkzeuge des Industrieroboters (61) gewechselt werden.

### Bezugszeichenliste:

- 1: Werkstück
- 2: Werkstückkante
- 3: Umgebung

- 5: Längsrichtung
- 6: Höhenrichtung

- 10: Bearbeitungszelle
- 11: Einhausung
- 12: Stirnwand von (11)
- 13: Stirnwand von (11)
- 14: Längswand von (11)
- 15: Längswand von (11)
- 16: Dach
- 17: Beschickungsöffnung, Werkstückschleuse
- 18: Förderöffnung
- 19: Dachschleuse, Schiebedach

- 21: Luftschläuche, Dichtung
- 22: Boden von (11)

- 31: Werkstücktisch
- 32: Gestell
- 33: Werkstückplattenträger
- 34: Schwenkachse
- 35: Werkstückaufspannvorrichtung
- 36: Werkstückaufspannvorrichtung
- 37: Werkstückaufspannseite
- 38: Werkstückaufspannseite
- 39: Arbeitsposition

- 41: Abdichtplatten
- 42: Werkstückspannelemente
- 43: Saugnapf
- 44: Zwischenraum
- 45: Werkstückaufspannfläche
- 46: Schwenkmotor

- 51: Späneförderer
- 52: Durchlasssperre
- 53: Fördergurt
- 54: Obertrum
- 55: Förderrichtung
- 56: Hubplatte
- 57: Hubvorrichtung

- 61: Industrieroboter, Vertikal-Knickarmroboter
- 62: translatorische Achse, A-Achse
- 63: rotatorische Hauptachse, B-Achse
- 64: rotatorische Hauptachse, C-Achse
- 65: Sockelschiene
- 66: Sockel
- 67: Fußhebel
- 68: Kniehebel

- 71: Nebenachse, D-Achse
- 72: Nebenachse, E-Achse
- 73: Nebenachse, F-Achse
- 74: Tragarm
- 75: Handhebel
- 76: Drehteller

- 81: Bearbeitungseinheit
- 82: Werkzeug, Bohrwerkzeug
- 83: Werkzeug, Sägewerkzeug
- 91: Arbeitsraum
- 92: Steuerschränke
- 93: Schaltschrank

- 100: Einblasvorrichtung
- 101: Einblasdüsen
- 102: Einblasdüse
- 103: Einlasskrümmer
- 104: Flachdüse
- 105: Einblasrichtung

- 110: Absaugvorrichtung
- 111: Absaugleitung
- 112: Absaugkanal
- 113: Absaugdüse
- 114: Absaugtrichter
- 115: Absaugrohr
- 116: Längskanäle
- 117: Stege
- 118: Absaugrichtung

- 120: Werkzeugwechsler

## Patentansprüche

1. Bearbeitungszelle (10) für spanende Trockenbearbeitung mit einem mittels einer, eine Einblasvorrichtung (100) und eine Absaugvorrichtung (110) aufweisenden Einhausung (11) begrenzten Arbeitsraum (91), **dadurch gekennzeichnet,**
- **dass** die Einhausung (11) bereichsweise mittels eines Werkstücktischs (31) verschlossen ist,
- **dass** die Einblasrichtung (105) der Einblasvorrichtung (100) parallel zu einer Werkstückaufspannfläche (45) des Werkstücktischs (31) ausgerichtet ist,
- **dass** ein Späneförderer (51) mit einer normal zur Einblasrichtung (105) orientieren Förderrichtung (55) unterhalb des Werkstücktischs (31) angeordnet ist und
- **dass** die Absaugvorrichtung (110) einen Absaugkanal (112) mit einer normal zur Förderrichtung (55) des Späneförderers (51) orientierten Absaugrichtung (118) hat, die mit der Einblasrichtung (105) einen Winkel zwischen 20 Grad und 160 Grad einschließt.

2. Bearbeitungszelle (10) nach Anspruch 1, **dadurch gekennzeichnet, dass** in Bezug auf den Arbeitsraum (91) die Einblasvorrichtung (100) und die Absaugvorrichtung (110) pneumatisch parallel zueinander geschaltet sind.

3. Bearbeitungszelle (10) nach Anspruch 1, **dadurch gekennzeichnet**, die Einblasvorrichtung (100) mindestens eine ein Dach (16) der Einhausung (11) durchdringende Einblasdüse (101; 102) aufweist.

4. Bearbeitungszelle (10) nach Anspruch 1, **dadurch gekennzeichnet, dass** die Gesamtlänge der Einblasdüsen (101, 102) mindestens 80 % der hierzu parallelen Länge des Werkstücktischs (31) beträgt.

5. Bearbeitungszelle (10) nach Anspruch 1, **dadurch gekennzeichnet, dass** der Absaugkanal (112) oberhalb eines Obertrums (54) des Späneförderers (51) angeordnet ist und an dieses angrenzt.

6. Bearbeitungszelle (10) nach Anspruch 1, **dadurch gekennzeichnet, dass** die Einhausung (11) eine an den Späneförderer (51) anlegbare Durchlasssperre (52) aufweist.

7. Bearbeitungszelle (10) nach Anspruch 1, **dadurch gekennzeichnet, dass** die Einhausung (11) eine an den Werkstücktisch (31) anlegbare Dichtung (21) hat.

8. Bearbeitungszelle (10) nach Anspruch 1, **dadurch gekennzeichnet, dass** im Arbeitsraum (91) ein Industrieroboter (61) mit einer Bearbeitungseinheit (81) angeordnet ist.

9. Bearbeitungszelle (10) nach Anspruch 8, **dadurch gekennzeichnet,**
- **dass** auf dem Dach (16) der Einhausung (11) ein Werkzeugwechsler (120) für die Bearbeitungseinheit (81) angeordnet ist und
- **dass** im Dach (16) der Einhausung (11) eine Dachschleuse (19) für einen Werkzeugwechsel eingebracht ist.

10. Verfahren zur Betrieb einer Bearbeitungszelle (10) nach Anspruch 1 zur Bearbeitung eines Werkstücks (1),
- wobei außerhalb der Einhausung (11) ein Werkstück (1) auf den Werkstücktisch (31) aufgespannt wird,
- wobei eine Werkstückaufspannvorrichtung (35; 36) des Werkstücktischs (31) mit dem Werkstück (1) so bewegt wird, dass der Werkstücktisch (31) in einer Arbeitsposition (39) steht und das Werkstück (1) sich im Arbeitsraum (91) befindet,
- dass die Einblasvorrichtung (100) auf einen bearbeitungsprozessabhängigen Volumenstrom eingestellt wird,
- dass die Absaugvorrichtung (110) derart eingestellt wird, dass der Druck im Arbeitsraum (91) geringer ist als der Druck in der Umgebung (3),
- wobei nach der spanenden Bearbeitung des Werkstücks (1) die Absaugvorrichtung (110) und die Einblasvorrichtung (100) abgeschaltet werden,
- wobei der Späneförderer (51) innerhalb eines vorgegebenen Zeitintervalls in der Förderrichtung (55) fördert und
- wobei der Werkstücktisch (31) mit dem bearbeiteten Werkstück (1) in die Ausgangslage geschwenkt wird.

## Claims

1. A machining cell (10) for dry machining, having a work chamber (91) which is delimited by means of an enclosure (11) having a blowing-in device (100) and an extraction device (110), **characterised in that**
- the enclosure (11) is closed in some regions by means of a workpiece table (31),
- the blowing-in direction (105) of the blowing-in device (100) is oriented parallel to a workpiece clamping face (45) of the workpiece table (31),
- a chip conveyor (51) with a conveying direction (55) which is oriented normally to the blowing-in direction (105) is arranged under the workpiece table (31), and
- the extraction device (110) has an extraction duct (112) with an extraction direction (118) which is oriented normally to the conveying direction (55) of the chip conveyor (51) and forms an angle between 20 degrees and 160 degrees with the blowing-in direction (105).

2. The machining cell (10) according to Claim 1, **characterised in that**, in relation to the work chamber (91), the blowing-in device (100) and the extraction device (110) are pneumatically switched in parallel with one another.

3. The machining cell (10) according to Claim 1, **characterised in that** the blowing-in device (100) has at least one blowing-in nozzle (101; 102) penetrating a roof (16) of the enclosure (11).

4. The machining cell (10) according to Claim 1, **characterised in that** the overall length of the blowing-in nozzles (101, 102) is at least 80 % of the length of the workpiece table (31) parallel thereto.

5. The machining cell (10) according to Claim 1, **characterised in that** the extraction duct (112) is arranged above an upper run (54) of the chip conveyor (51) and adjacent thereto.

6. The machining cell (10) according to Claim 1, **characterised in that** the enclosure (11) has a passage block (52) which can be applied to the chip conveyor (51) .

7. The machining cell (10) according to Claim 1, **characterised in that** the enclosure (11) has a seal (21) which can be applied to the workpiece table (31).

8. The machining cell (10) according to Claim 1, **characterised in that** an industrial robot (61) with a machining unit (81) is arranged in the work chamber (91) .

9. The machining cell (10) according to Claim 8, **characterised in that**
- a tool changer (120) for the machining unit (81) is arranged on the roof (16) of the enclosure (11), and
- a roof lock (19) for a tool change is made in the roof (16) of the enclosure (11).

10. A method for operating a machining cell (10) according to Claim 1 for machining a workpiece (1),
- wherein a workpiece (1) is clamped to the workpiece table (31) outside the enclosure (11),
- wherein a workpiece clamping device (35; 36) of the workpiece table (31) is moved with the workpiece (1) such that the workpiece table (31) is in a working position (39) and the workpiece (1) is in the work chamber (91),
- the blowing-in device (100) is set to a volumetric flow dependent on the machining process,
- the extraction device (110) is set such that the pressure in the work chamber (91) is lower than the pressure in the environment (3),
- wherein, after machining of the workpiece (1), the extraction device (110) and the blowing-in device (100) are switched off,
- wherein the chip conveyor (51) conveys in the conveying direction (55) within a predefined time interval, and
- wherein the workpiece table (31) with the machined workpiece (1) is pivoted into the starting position.

## Revendications

1. Cellule d'usinage (10), destinée à l'usinage à sec par enlèvement de copeaux, pourvue d'un espace de travail (91) délimité au moyen d'une enceinte (11) comportant un dispositif d'injection (100) et un dispositif d'aspiration (110), **caractérisée**
- **en ce que** l'enceinte (11) est fermée par endroits au moyen d'une table porte-pièces (31),
- **en ce que** la direction d'injection (105) du dispositif d'injection (100) est alignée à la parallèle d'une surface de bridage (45) des pièces de la table porte-pièces (31),
- **en ce qu'**un convoyeur de copeaux (51) présentant une direction de convoyage (55) orientée à la normale de la direction d'injection (105) est placé en-dessous de la table porte-pièces (31) et
- **en ce que** le dispositif d'aspiration (110) dispose d'un conduit d'aspiration (112) présentant une direction d'aspiration (118) orientée à la normale de la direction de convoyage (55) du convoyeur de copeaux (51), qui inclut avec la direction d'injection (105) un angle compris entre 20 degrés et 160 degrés.

2. Cellule d'usinage (10) selon la revendication 1, **caractérisée en ce qu'**en rapport à l'espace de travail (91), le dispositif d'injection (100) et le dispositif d'aspiration (110) sont raccordés par voie pneumatique à la parallèle l'un de l'autre.

3. Cellule d'usinage (10) selon la revendication 1, **caractérisée en ce que** le dispositif d'injection (100) comporte au moins une buse d'injection (101 ; 102) traversant un toit (16) de l'enceinte (11).

4. Cellule d'usinage (10) selon la revendication 1, **caractérisée en ce que** la longueur totale des buses d'injection (101, 102) s'élève à au moins 80 % de la longueur de la table porte-pièces (31) qui est parallèle à celle-ci.

5. Cellule d'usinage (10) selon la revendication 1, **caractérisée en ce que** le conduit d'aspiration (112) est placé au-dessus d'un brin supérieur (54) du convoyeur de copeaux (51) et est adjacent à celui-ci.

6. Cellule d'usinage (10) selon la revendication 1, **caractérisée en ce que** l'enceinte (11) comporte une barrière anti-passage (52) susceptible d'être appliquée sur le convoyeur de copeaux (51).

7. Cellule d'usinage (10) selon la revendication 1, **caractérisée en ce que** l'enceinte (11) dispose d'un joint (21) susceptible d'être appliqué sur la table porte-pièces (31).

8. Cellule d'usinage (10) selon la revendication 1, **caractérisée en ce que** dans l'espace de travail (91) est placé un robot industriel (61) pourvu d'une unité d'usinage (81).

9. Cellule d'usinage (10) selon la revendication 8, **caractérisée**
- **en ce que** sur le toit (16) de l'enceinte (11) est placé un changeur d'outil (120) pour l'unité d'usinage (81) et
- **en ce que** dans le toit (16) de l'enceinte (11) est intégré un sas de toit (19) pour un changement d'outil.

10. Procédé opérationnel d'une cellule d'usinage (10) selon la revendication 1, destinée à usiner une pièce (1),
- à l'extérieur de l'enceinte (11), une pièce (1) étant bridée sur la table porte-pièces (31),
- un dispositif de bridage des pièces (35 ; 36) de la table porte-pièces (31) étant déplacé avec la pièce (1), de telle sorte que la table porte-pièces (31) soit dans une position de travail (39) et que la pièce (1) se trouve dans l'espace de travail (91),
- en ce que l'on règle le dispositif d'injection (100) à un débit volumétrique dépendant du processus d'usinage,
- en ce que l'on règle le dispositif d'aspiration (110) de telle sorte que la pression dans l'espace de travail (91) soit inférieure à la pression dans l'environnement (3),
- après l'usinage par enlèvement de copeaux de la pièce (1), le dispositif d'aspiration (110) et le dispositif d'injection (100) étant mis à l'arrêt,
- le convoyeur de copeaux (51) convoyant dans la direction de convoyage (55) dans un intervalle de temps prédéfini et
- la table porte-pièces (31) étant pivotée avec la pièce (1) usinée dans la position initiale.
